Europäisches Patentamt

European Patent Office

Office européen des brevets

(11) Veröffentlichungsnummer: **0 136 695**
**B1**

(12) **EUROPÄISCHE PATENTSCHRIFT**

(45) Veröffentlichungstag der Patentschrift: 11.04.90

(21) Anmeldenummer: 84111755.9

(22) Anmeldetag: 02.10.84

(51) Int. Cl.⁵: **B 29 C 45/02**

(54) **Presse mit mehreren Spritzkolben.**

(30) Priorität: 05.10.83 DE 3336173

(43) Veröffentlichungstag der Anmeldung:
10.04.85 Patentblatt 85/15

(45) Bekanntmachung des Hinweises auf die
Patenterteilung:
11.04.90 Patentblatt 90/15

(84) Benannte Vertragsstaaten:
GB NL

(56) Entgegenhaltungen:
US-A-2 072 349
US-A-3 836 303
US-A-3 890 413
US-A-4 347 211

(73) Patentinhaber: Maschinenfabrik Lauffer GmbH
& Co. KG
Bachstrasse
D-7240 Horb 1 (DE)

(72) Erfinder: Plocher, Werner
Dettingerstrasse 29
D-7240 Horb 1 (DE)

(74) Vertreter: Ott, Elmar, Dipl.-Ing.
Kappelstrasse 8
D-7240 Horb 1 (DE)

Courier Press, Leamington Spa, England.

**Beschreibung**

Die Erfindung betrifft eine Presse mit mehreren Spritzkolben zur gleichzeitigen Herstellung mehrerer Kunststoffpreßteile, insbesondere zur Herstellung der Gehäuse von Halbleiterschaltungen, die wenigstens eine Spritzform hat, aus deren Füllräumen die erwärmte preßmasse von den Spritzkolben über Kanäle in zugehörige Kavitäten gepreßt wird, wobei jedem der Füllräume zur Druckbegrenzung ein Ausgleichskolben zugeordnet ist und jeder der Ausgleichskolben von einem Hydraulikzylinder betätigt wird.

Es sind Pressen mit mehreren Spritzkolben zur Herstellung der Gehäuse von integrierten Halbleiterschaltungen bekannt. Die als sogenannte Chips ausgebildeten Halbleiterschaltungen sind auf einem gemeinsamen Metallstreifen aufgebracht, der in die Spritzform eingelegt wird. Die Spritzform wird geschlossen und die in den Kavitäten liegenden Halbleiterchips werden dann jeweils in ein separates Kunststoffgehäuse eingegossen. Als Kunststoffe werden dabei vorzugsweise Duroplaste verwendet.

Aus der US—PS 4,347,211 ist eine solche Presse bekannt, bei der jeder Kavität ein Spritzkolben zugeordnet ist. Für überschüssiges Plastikmaterial ist außerdem jede Kavität mit einem separaten Hohlraum über einem dünnen Kanal verbunden. Wurde das zu verpressende Plastikmaterial nicht exakt dosiert, so soll über dünne Kanäle das überschüssige Plastikmaterial in die Hohlräume abfließen. Diese beigeordneten Hohlräume haben jedoch einen unkontrollierbaren Einfluß auf den Preßdruck. Eine einigermaßen genaue Preßdruckgrenze kann durch diese Maßnahme nicht eingehalten werden.

Die Druckbegrenzung mittels Ausgleichskolben ist aus der US—PS 3,836,303 bekannt. Hierbei handelt es sich um eine Transfer-Molding-Presse, bei der einem Spritzkolben gegenüberliegend ein Ausgleichskolben zugeordnet ist, der gegen eine Federkraft bei Überschreiten eines bestimmten Preßdruckes zurückweichen kann. Der wesentliche Unterschied zum Anmeldungsgegenstand besteht jedoch darin, daß jeder Ausgleichskolben bei der bekannten Presse eine separate Druckbegrenzung hat, wodurch sich zwangsläufig keine einheitliche Druckbegrenzung bei Verwendung mehrerer Ausgleichskolben ergeben kann. Für Präzisions-Spritzteile ist es jedoch keinesfalls zweckmäßig, unterschiedliche Druckbegrenzungen zu haben, die nicht nur zumindest geringfügig abweichende Spritzqualitäten hervorrufen, sondern auch einen beträchtlichen Aufwand darstellen. Auch kann eine exakte Druckbegrenzung durch die Verwendung von Federn mit dem Ausgleichskolben nicht erreicht werden, da für das Zurückdrängen des Ausgleichskolbens ein umso höherer Druck aufgewendet werden muß je weiter der Ausgleichskolben zurückgewichen ist. Insbesondere zum Spritzen von Präzisionsteilen, die eine sehr exakte Druckbegrenzung erfordern, kann die Druckbegrenzung nicht mittels dieser bekannten Anordnung erfolgen. Außerdem hat diese bekannte Presse den Nachteil, daß bei Verwendung mehrerer Spritzkolben entsprechend mehrere, voneinander unabhänige Ausgleichskolben zugeordnet sind, die aufgrund von Federtoleranzen stark abweichende Druckbegrenzungen bewirken.

Der Erfindung liegt die Aufgabe zugrunde, eine Presse der eingangs genannten Gattung zu schaffen, bei der ein möglichst einfacher Antrieb für eine Vielzahl von Spritzkolben Verwendung finden kann, wobei gleichzeitig für die Kavitäten der verschiedenen Spritzkolben eine sehr genaue Druckbegrenzung möglich ist.

Die Lösung dieser Aufgabe wird bei einer Presse der eingangs genannten Gattung mit den im Hauptanspruch angegebenen Merkmalen erreicht.

Um bei einem vorgegebenen Preßdruck einen Druckausgleich vornehmen zu können, wird vorzugsweise jedem unter der Spritzform angeordneten Spritzkolben in axialer Verlängerung ein oberer Ausgleichskolben zugeordnet.

Das untere Ende des Ausgleichskolbens und das obere Ende des Spritzkolbens bilden einen Teil der Begrenzungsflächen des Füllraumes, in dem das Plastikmaterial verpreßt wird. Der Ausgleichskolben wird von einem konstanten maximalen Druck in seiner unteren Position gehalten. Wird dieser maximale Druck im Füllraum überschritten, so weicht der Ausgleichskolben geringfügig nach oben aus. Auf diese Weise erhält man die gewünschte Druckbegrenzung bei Überschreiten eines maximalen Druckes.

Die Anordnung, daß Spritzkolben und zugehörige Ausgleichskolben eine gemeinsame Mittelachse haben, stellt nur eine der möglichen Ausführungsformen dar. Je nach Anwendungsfall kann mehreren Kavitäten ein Ausgleichskolben oder auch jeder Kavität ein separater Ausgleichskolben zugeordnet werden.

Besonders vorteilhaft ist es, daß jeder der Ausgleichskolben von einem Hydraulikzylinder betätigt wird, daß deren Druckkammern miteinander verbunden sind, und daß ein gemeinsamer Druckbegrenzer an die Druckkammern angeschlossen ist. Die Ausgleichskolben arbeiten somit gegen einen festen, vorgegebenen Druck, der durch den gemeinsamen Druckbegrenzer festgelegt wird. Wenn nun in einem der Füllräume dieser vorgegebene Druck überschritten wird, weicht der enhtsprechende Ausgleichskolben geringfügig zurück, so daß in diesem Füllraum ein Druckausgleich bzw. Druckabfall eintritt. Obgleich sämtliche Ausgleichskolben von einem gemeinsamen Begrenzer überwacht werden, wird dennoch in jedem der Füllräume eine individuelle Druckbegrenzung vorgenommen, falls der eingestellte Druck erreicht wird.

Der maximale Spritzdruck kann mittels des Druckbegrenzers so eingestellt werden, daß ungefähr während der letzten zehn Prozent des Spritzvorganges eine Druckabsenkung erfolgt. Auf diese Weise erhält man qualitativ hochwertige Pressteile und Ausschuß wird vermieden.

Die Erfindung wird nachfolgend anhand der Zeichnungen näher erläutert. Es zeigen:

Figur 1 einen senkrechten Schnitt, der eine schematische Darstellung der erfindungsgemäßen Presse zeigt,

Figur 2 den Schnitt AB, der in Figur 1 dargestellten Presse und

Figur 3 einen detaillierteren Ausschnitt aus der in Figur 2 dargestellten Ansicht.

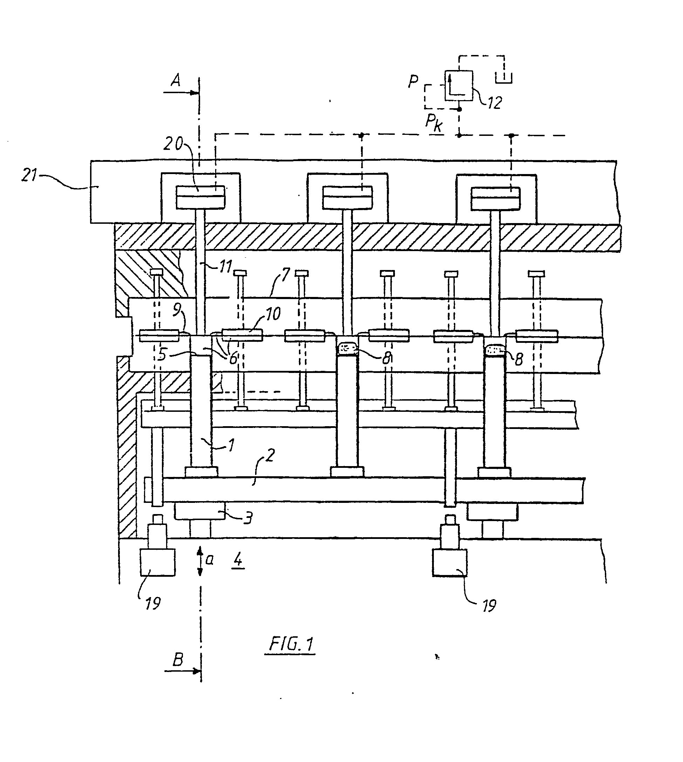

Die in Figur 1 dargestellte Presse besitzt mehrere Spritzkolben 1, die über eine gemeinsame Traverse 2 betätigt werden. Die Traverse 2 ist zu diesem Zweck über Kopplungsstücke 3 mit einem unteren, beweglichen Maschinenteil 4 verbunden. Der Maschinenteil 4 kann entsprechend der Pfeilrichtung a angehoben oder abgesenkt werden.

Das obere Ende 5 der Spritzkolben 1 ragt in den Füllraum 6 einer Spritzform 7. In der dargestellten position der Spritzkolben 1 sind diese soweit abgesenkt, daß oberhalb der Spritzkolben 1 das zu verpressende Plastikmaterial 8 eingelegt werden kann. Das Plastikmaterial 8 wird dann in der Spritzform 7 erhitzt und unter Druck verpreßt. Zu diesem Zweck wird der bewegliche Maschinenteil 4 nach oben bewegt, wodurch sich gleichermaßen die Spritzkolben 1 nach oben bewegen. Das Plastikmaterial 8 wird über Kanäle 9 in Formnester bzw. Kavitäten 10 gepreßt.

Um eine Druckbegrenzung in der Spritzform 7 zu ermöglichen, besitzt die dargestellte Presse obere Ausgleichskolben 11, die bei Erreichen eines maximalen Druckes geringfügig nach oben nachgeben. Zu diesem Zweck werden die Ausgleichskolben mit einem konstanten Druck $P_k$ nach unten gegen einen festen Anschlag in die dargestellte Stellung gepreßt. Überschreitet der Preßdruck in einem der Füllräume 6 diesen konstanten Druck $P_k$, so gibt der entsprechende Ausgleichskolben 11 nach. Das Volumen des zugehörigen Füllraumes 6 wird dadurch geringfügig erhöht, wodurch eine Druckbegrenzung entsteht. Wird beispielsweise eine zu große Menge Plastikmaterial 8 in einen Füllraum 6 eingelegt, so gleicht der zugehörige Ausgleichskolben 11 diese Überdosierung aus. Der konstante Druck $P_k$ kann so eingestellt sein, daß auch bei richtiger Dosierung des Plastikmaterials 8 im letzten Teil des Pressvorganges eine Druckbegrenzung eintritt, wodurch qualitativ hochwertige Pressteile erzielt werden können und Ausschuß vermieden wird.

Zur Bereitstellung eines konstanten Druckes $P_k$ für die Ausgleichskolben 11 kann ein einstellbarer Druckbegrenzer 12 verwendet werden, der einen zur Verfügung gestellten Druck P auf den gewünschten konstanten Pressdruck $P_k$ reduziert.

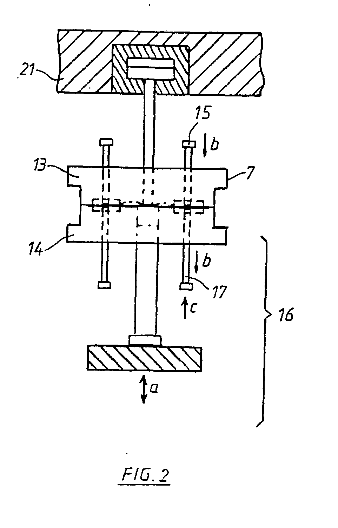

Der in Figur 2 dargestellte vertikale Schnitt AB ist vereinfacht dargestellt. Die Spritzform 7 besteht aus einem oberen Formteil 13 und einem unteren Formteil 14. Zum Beschicken der Presse und zum Auswerfen des verpreßten Materials wird das untere Formteil 14 abgesenkt.

Zum Auswerfen des verpreßten Materials werden Auswerfer 15 in Pfeilrichtung b nach unten bewegt. Dadurch wird das verpreßte Material und das untere Formteil 14 abgesenkt. Der gesamte untere Teil 16 wird dabei entsprechend abgesenkt. Dann werden untere Auswerfer 17 nach oben gedrückt, wodurch die Pressteile aus dem unteren Formteil 14 nach oben ausgedrückt werden. Die Entnahme der pressteile kann dann über eine hier nicht näher dargestellte Absaugeinrichtung erfolgen.

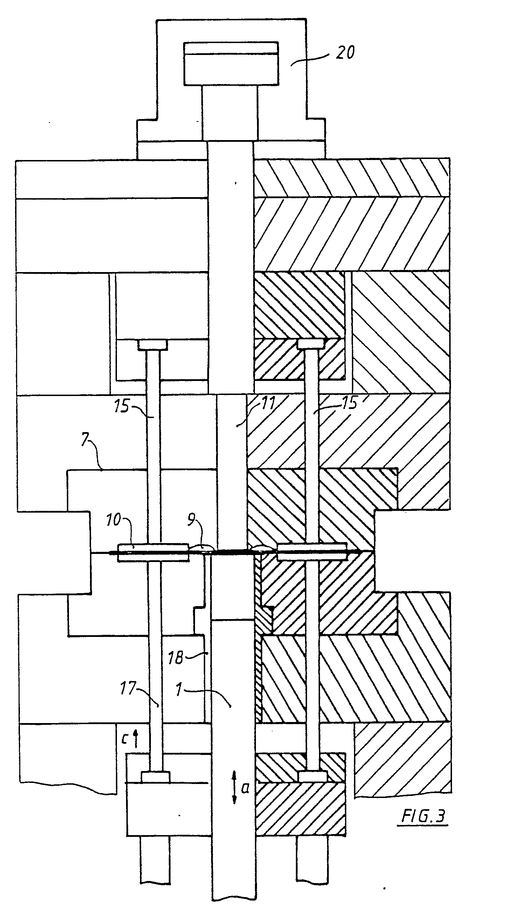

Die detailliertere Teilansicht von Figur 3 zeigt eine mögliche Ausführungsform für die Anordnung von Spritzkolben 1, Ausgleichskolben 11 und Auswerfer 15, 17. Das obere Ende 5 des Spritzkolbens 1 wird in einer Buchse 18 geführt. In den oberen Bereich der Buchse 18 wird das zu verpressende Plastikmaterial in Form von Pulver oder in Tablettenform eingelegt. Die Spritzform 7 kann so ausgelegt sein, daß jedem Spritzkolben 1 zwei gegenüberliegende Kavitäten 10 zugeordnet sind. In den Figuren 1 und 2 sind jedem Spritzkolben vier Kavitäten 10 zugeordnet. Die Betätigung der Auswerfer 17 kann über hydraulische Antriebe 19 erfolgen, die in Figur 1 vereinfacht dargestellt sind. Diese Antriebe 19 können die Auswerfer 17 bei geöffneter Spritzform 7 in der Pfeilrichtung c nach oben drücken. Die Hydraulikzylinder bzw. die Antriebe 19 für die Auswerfer 17 sind in dem beweglichen Maschinenteil 4 angeordnet. Die Hydraulikzylinder 20 für die oberen Auswerfer 15 sind dagegen im oberen, starren Maschinenteil 21 befestigt.

Die Füllräume 6 werden von dem oberhalb der Spritzikolben 1 befindlichen Raum, den Kanälen 9 und den Formnestern 10 gebildet. Die mechanisch gekoppelten Spritzkolben 1 verteilen das Plastikmaterial 8 beim Pressvorgang jeweils im gesamten Füllraum 6, wobei eine örtliche Druckbegrenzung dadurch erfolgt, daß der oder die entsprechenden Ausgleichskolben 11 bei Erreichen eines vorgegebenen Druckes geringfügig nachgibt.

**Patentansprüche**

1. Presse mit mehreren Spritzkolben (1) zur gleichzeitigen Herstellung mehrerer kunststoffpreßteile, insbesondere zur Herstellung der Gehäuse von Halbleiterschaltungen, die wenigstens eine Spritzform (7) hat, aus deren Füllräumen (6) die erwärmte Preßmasse von den Spritzkolben (1) über Kanäle (9) in zugehörige Kavitäten (10) gepreßt wird, wobei jedem der Füllräume (6) eine Druckbegrenzungseinrichtung (11, 20) zugeordnet ist, dadurch gekennzeichnet, daß die Druckbegrenzungseinrichtungen von jeweils einem Ausgleichskolben (11) und einem diesen betätigenden Hydraulikzylinder (20) gebildet werden, daß die den Hydraulikzylindern (20) zugeordneten Druckkammern miteinander verbunden sind, daß ein gemeinsamer Druckbegrenzer (12) an die Druckkammern angeschlossen ist, und daß mehrere Spritzkolben (1) einen starr gekoppelten gemeinsamen Antrieb (2, 3, 4) haben.

2. Presse nach Anspruch 1, dadurch gekennzeichnet, daß jeder der Ausgleichskolben (11) unabhängig von den übrigen Ausgleichskolben (11) bei Erreichen eines vorgegebenen, maximalen Druckes ($P_k$) geringfügig nachgibt um eine Druckminderung zu bewirken.

**Revendications**

1. Une presse comportant plusieurs pistons d'injection (1) destinée à la fabrication simultanée de plusieurs pièces moulées en matière plastique, notamment à la fabrication des boîtiers de cartes à circcuit imprimé à semi-conducteurs, à savoir une presse possédant au moins un moule à injection (7) à travers les compartiments de remplissage duquel (6) la matière à mouler chauffée est pressée par les pistons d'injection (1), par l'intermédiaire des conduits (9) dans les cavités correspondantes (10), un équipement de limitation de la pression (11, 20) étant, associé à chacun des compartiments de remplissage (6), ladite presse étant caractérisée par le fait que les équipements de limitation de la pression sont formés chacun par un piston de compensation (11) et par un vérin hydraulique (20) actionnant ledit piston, par le fait que les compartiments de pression associés aux vérins hydrauliques (20) sont reliés les uns aux autres, par le fait qu'un limiteur de pression commun (12) est raccordé aux chambres de moulage par injection et par le fait quo plusieurs pistons d'injection (1) possèdent un entraînement commun à accouplement rigide (2, 3, 4).

2. Une presse répondant à la revendication 1, caractérisée par le fait que chacun des pistons de compensation (11) cède légèrement, indépendamment des autres pistons de compensation (11) lorsq'une valeur de pression maximale prédéterminée ($P_k$) est atteinte, afin d'engendrer une réduction de la pression.

**Claims**

1. Press with a plurality of injection plungers (1) for the simultaneous production of several plastic mouldings, particularly for producing the casing of semiconductor circuits, which has at least one injection mould (7) from whose loading chamber (6) the heated moulding material is pressed by the injection plungers (1) via channels (9) into associated cavities (10), a pressure limiting means (11, 20) being associated with each of the loading chambers (6), characterized in that the pressure limiting means are in each case formed by a compensating plunger (11) and a hydraulic cylinder (20) operating the latter, that the pressure chambers associated with the hydraulic cylinders (20) are interconnected, that a common pressure limiter (12) is connected to the pressure chambers and that several injection plungers (1) have a rigidly coupled, common drive (2, 3, 4).

2. Press according to claim 1, characterized in that each of the compensating plungers (11), independently of the other compensating plungers (11), on reaching a predetermined, maximum pressure ($P_k$) yields slightly in order to bring about a pressure reduction.

_FIG.1_

FIG.2

FIG.3